Europäisches Patentamt

European Patent Office

Office européen des brevets

(19)

(11) Veröffentlichungsnummer: **0 324 145**

**A2**

# (12) EUROPÄISCHE PATENTANMELDUNG

(21) Anmeldenummer: 88121421.7

(22) Anmeldetag: 21.12.88

(51) Int. Cl.⁴: **G06F 3/023 , G06F 3/033**

(30) Priorität: 13.01.88 DE 3800770

(43) Veröffentlichungstag der Anmeldung:
19.07.89 Patentblatt 89/29

(84) Benannte Vertragsstaaten:
**AT DE ES FR GB IT SE**

(71) Anmelder: **Siemens Aktiengesellschaft Berlin und München**
**Wittelsbacherplatz 2**
**D-8000 München 2(DE)**

(72) Erfinder: **Spiegel, Gerald**
**Grenzstrasse 10**
**D-7500 Karlsruhe 41(DE)**

(54) **Anordnung zum Verschieben eines Bildausschnitts und Positionieren eines Cursors auf dem Bildschirm eines Sichtgerätes.**

(57) Eine Umschaltung zwischen einer Betriebsart "Bildrollen" und einer Betriebsart "Cursor im Bildausschnitt positionieren" wird dadurch erleichtert, daß während der Betriebsart "Bildrollen" ein Cursor (CU) in eine definierte Position auf einem Bildschirm (BS) gebracht wird, daß, wenn der Rand eines Bildausschnitts (BD) den Rand des Bildes erreicht, der Cursor (CU) verschoben wird und daß, wenn der Cursor (CU) die definierte Position erreicht, das Bild gerollt wird.

Die Erfindung wird angewandt bei Sichtgeräten.

## Anordnung zum Verschieben eines Bildausschnitts und Positionieren eines Cursors auf dem Bildschirm eines Sichtgerätes

Die Erfindung betrifft eine Anordnung zum Verschieben eines Bildausschnitts und Positionieren eines Cursors auf dem Bildschirm eines Sichtgerätes gemäß dem Oberbegriff des Anspruchs 1.

Häufig sollen mit Sichtgeräten Übersichtsbilder von Anlagen, z. B. der Energieerzeugung oder -verteilung, wiedergegeben werden. Eine gleichzeitige Darstellung der gesamten Anlage mit den Anlagenzuständen ist in der Regel nicht möglich und aus Gründen der Übersichtlichkeit auch nicht erwünscht. Wie in der DE-PS 28 36 500 angegeben, kann man die Informationen, die für die Darstellung des gesamten Bildes, des sogenannten Großbildes, erforderlich sind, in einem Bildwiederholspeicher hinterlegen und aus diesem nur einen Teil auslesen, so daß ein Bildausschnitt aus dem Großbild dargestellt wird.

Bei CAD-Anwendungen besteht häufig die Forderung, einen Teil eines im Bildwiederholspeicher hinterlegten Bildes vergrößert (gezoomt) darzustellen. Auch in diesem Fall kann lediglich ein Bildausschnitt aus dem im Bildwiederholspeicher hinterlegten Bild auf dem Bildschirm dargestellt werden.

Das Verschieben eines auf einem Bildschirm darzustellenden Bildausschnitts aus einem in einem Bildwiederholspeicher abgespeicherten Großbild oder Bild bezeichnet man als "Bildrollen".

Als Bedieneinheit zum Verschieben eines Bildausschnitts auf einem Bildschirm und Positionieren eines Cursors auf diesem Bildschirm kann eine sogenannte "Maus" mit einer Steuerelektronik benutzt werden. Die Bewegungen der "Maus" auf einem Tablett werden erfaßt und in positive oder negative $\Delta x$- und $\Delta y$-Impulse (Wegimpulse) umgewandelt.

Aus dem Siemens-Benutzerhandbuch "GEM DRAW", Ausgabe 1985, ist bekannt, daß ein auf einem Bildschirm dargestellter Bildausschnitt mit Hilfe von zwei Verschiebebalken, die rechts und unterhalb des Bildausschnittes angebracht sind, in horizontaler und vertikaler Richtung (X- und Y-Richtung) verschoben werden kann. Dabei muß der im Bildausschnitt positionierte Cursor zunächst auf einen Verschiebebalken verschoben werden, und durch Bewegen des Cursors innerhalb des Verschiebebalkens wird der Bildausschnitt entsprechend der Verschieberichtung des Cursors verschoben. Um wieder einen Punkt innerhalb des Bildausschnittes anwählen zu können, muß der Cursor vom Verschiebebalken in den Bildausschnitt gebracht werden. Ein Umschalten zwischen diesen beiden Betriebsarten "Bildrollen" und "Cursor im Bildausschnitt verschieben" kann also nur durch erneute Cursorpositionierung erfolgen.

Der Erfindung liegt die Aufgabe zugrunde, bei einer Anordnung der eingangs genannten Art eine Verschiebung eines Bildausschnitts und ein Positionieren eines Cursors auf einem Bildschirm zu erleichtern.

Diese Aufgabe wird erfindungsgemäß dadurch gelöst, daß während des Bildrollens ein Cursor in eine definierte Position auf einem Bildschirm gebracht wird, daß, wenn der Rand eines Bildausschnitts einen Bildrand erreicht, der Cursor verschoben wird und daß, wenn der Cursor die definierte Position erreicht, das Bild gerollt wird.

Dabei erweist es sich als vorteilhaft, daß nach Abschluß des Bildrollens der für den Benutzer wichtige Teil des Bildausschnitts in die definierte Position - z. B. in die Bildschirmmitte - gebracht ist. Erst wenn der Rand des Bildausschnitts den Bildrand erreicht, wird der Cursor entsprechend der Bewegungs richtung eines Bedienelements, z. B. einer "Maus", die Teil einer Bedieneinheit ist, verschoben.

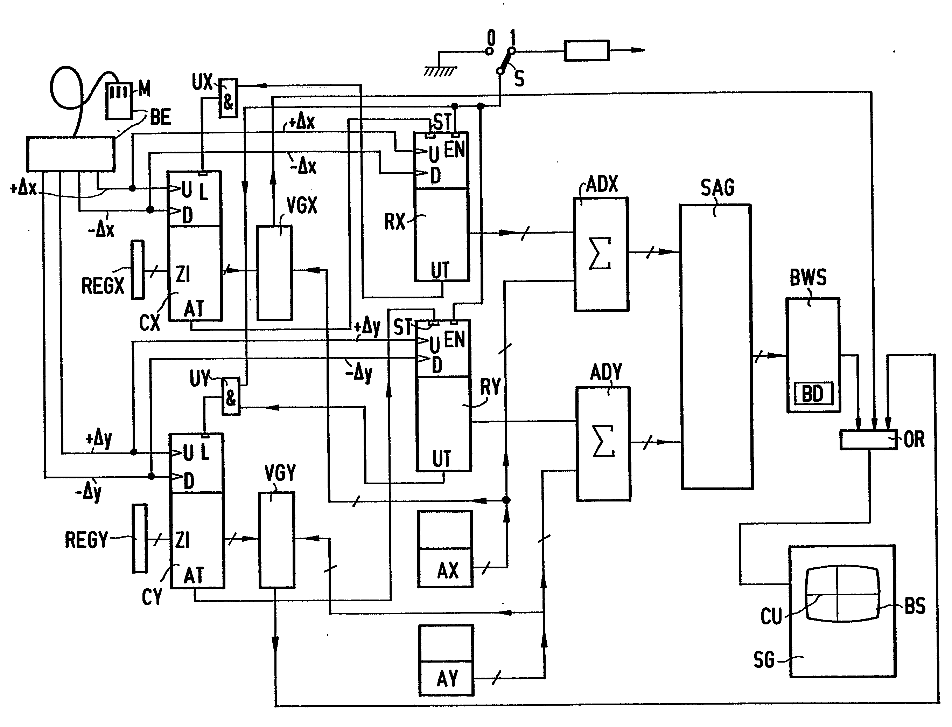

Anhand der Zeichnung, in der das Blockschaltbild eines Ausführungsbeispiels dargestellt ist, werden die Erfindung und deren Ausgestaltungen näher beschrieben.

In einem Bildwiederholspeicher BWS sei ein Bild abgelegt, das nicht in seiner vollen Größe auf dem Bildschirm BS eines Sichtgerätes SG dargestellt werden kann. Der Teil des Bildwiederholspeichers BWS, der ausgelesen und auf dem Bildschirm BS dargestellt werden soll, wird von einem linearen Speicheradreßgenerator SAG im Gleichtakt mit der Strahlablenkung des Bildschirms adressiert. Physikalische Adressen zum Adressieren von Speicherzellen des Bildwiederholspeichers BWS ermittelt der lineare Speicheradreßgenerator SAG durch Umwandlung der Zählerstände von Addierern ADX, ADY, die dem linearen Speicheradreßgenerator SAG vorgeschaltet sind. Die Addierer ADX, ADY errechnen ihre Zählerstände durch Summation der Zählerstände von jeweiligen Abbildungszählern AX, AY und Bildrollzählern RX, RY. Die Zählerstände der Abbildungszähler AX, AY, welche die Punkt- und Zeilentakte zählen und synchron mit der Position des Elektronenstrahls auf dem Bildschirm BS laufen, werden jeweiligen Vergleichern VGX, VGY zugeführt. Horizontale und vertikale Wegimpulse + $\Delta x$, - $\Delta x$, + $\Delta y$, - $\Delta y$ einer Maus M, die Teil einer Bedieneinheit BE zum Verschieben eines Cursors CU und zum Bildrollen eines auf dem Bildschirm BS dargestellten Bildausschnitts BD ist, werden von jeweiligen Cursorpositionszählern CX, CY gezählt und ebenfalls den jeweiligen Vergleichern VGX, VGY aufgeschaltet. Die Wegimpulse + $\Delta x$

und + Δy werden sowohl Vorwärtszähleingängen U des Cursorpositionszählers CX als auch des Bildrollzählers RX zugeführt. Entsprechend werden die Wegimpulse - Δx und - Δy Rückwärtszähleingängen D des Cursorpositionszählers CY und des Bildrollzählers RY zugeführt. Ist der Stand des Cursorpositionszählers CX bzw. CY gleich dem Stand des zugehörigen Abbildungszählers AX bzw. AY, so gibt der jeweilige Vergleicher VGX, VGY über ein ODER-Verknüpfungsglied OR ein Helltastsignal auf das Sichtgerät SG, das die Darstellung eines Cursorpunktes an den Zählerständen entsprechenden Bildpunktkoordinaten bewirkt. Der Cursor CU ist in diesem Fall ein Achsenkreuz, dessen Schnittpunkt seine Position ist. Eine Betriebsart "Bildrollen" wird durch Umlegen eines Schalters S in eine Stellung "1", eine Betriebsart "Cursor im Bildausschnitt verschieben" durch Umlegen des Schalters S in eine Stellung "0" eingestellt.

Liegt der Schalter in der Stellung "0" - die Betriebsart "Cursor im Bildausschnitt verschieben" ist also eingeschaltet -, so liegt ein Sperrsignal an einem Eingang EN der jeweiligen Bildrollzähler RX, RY. Dadurch werden die Vor- und Rückwärtszähleingänge U, D der Bildrollzähler RX, RY gesperrt und Steuereingängen L der Cursorpositionszähler CX, CY über UND-Verknüpfungsglieder UX, UY Freigabesignale aufgeschaltet. Das hat zur Folge, daß die Vorwärts- und Rückwärtszähleingänge U, D der Cursorpositionszähler CX, CY freigeschaltet werden, d. h., die Wegimpulse + Δx, - Δx, + Δy, - Δy der Maus M werden von den Cursorpositionszählern CX, CY gezählt.

Liegt der Schalter in der Stellung "1", d. h., die Betriebsart "Bildrollen" ist eingeschaltet, so liegt ein Freigabesignal an dem jeweiligen Eingang EN der Bildrollzähler RX, RY, und der Zählvorgang in diesen Bildrollzählern wird gestartet. Die den Vor- und Rückwärtszähleingängen U, D zugeführten Wegimpulse + Δx, - Δy, + Δy, - Δy der Maus M werden gezählt und Übernahmesignale über die nun freigegebenen UND-Verknüpfungsglieder UX, UY auf den Steuereingang L der Cursorpositionszähler CX, CY geschaltet. Daraufhin werden die jeweiligen Vorwärts- und Rückwärtszähleingänge U, D der Cursorpositionszähler CX, CY gesperrt und die in Cursorpositionszählern CX, CY vorgeschalteten Registern REGX, REGY jeweils gespeicherten Werte in die Cursorpositionszähler CX, CY übernommen. Die X-Achse des Cursors CU liegt dann in der Zeile, welche dem Wert des vom Cursorpositionszähler CX übernommenen Wertes, die Y-Achse des Cursors CU in der Spalte, welche dem Wert des vom Cursorpositionszähler CY übernommenen Wertes entspricht.

Im folgenden wird die Funktion des Ausführungsbeispiels näher erläutert.

Das in dem Bildwiederholspeicher BWS abgelegte Bild mit einer Größe von 4096 x 4096 Bildpunkten soll auf dem Bildschirm BS des Sichtgerätes SG dargestellt werden. Der Bildschirm BS habe eine Auflösung von 1024 x 1024 Bildpunkten. Ein Cursor CU befinde sich während des Bildrollens in einer definierten Position, z. B. in der Bildschirmmitte. Das bedeutet, daß bei einer Bildschirmauflösung von 1024 x 1024 Bildpunkten die definierte Cursorposition beim 512. Bildpunkt in der horizontalen und auch in der vertikalen Richtung liegt. Die in den Registern REGX, REGY gespeicherten Werte betragen somit 512. Die zu dem Bildrollzähler RX gehörenden Extremwerte, nach deren Erreichen der Bildrollzähler RX über seinen Übertragausgang UT ein Freigabesignal auf den Steuereingang L des Cursorpositionszählers CX schaltet, liegen bei EX1 = 0, EX2 = 3072 (4095 - 1023 = 3072); die beiden Extremwerte des Bildrollzählers RY, nach deren Erreichen der Bildrollzähler RY über seinen Übertragausgang UT ein Freigabesignal auf den Steuereingang L des Cursorpositionszählers CY schaltet, liegen ebenfalls bei EY1 = 0 und EY2 = 3072.

Ist in einem Grundzustand der Anordnung die Betriebsart "Cursor im Bildausschnitt verschieben" eingeschaltet, d. h., der Schalter S liegt in der Stellung "0", so schalten, wie beschrieben, die Bildrollzähler RX und RY die Freigabesignale auf den Steuereingang L der Cursorpositionszähler CX, CY. Daraufhin werden die Wegimpulse + Δx, - Δx, + Δy, - Δy der Maus M von den Cursorpositionszählern CX, CY gezählt. Der Cursor CU erscheint auf dem Bildschirm BS an der X- und Y-Position, die den Zählerständen der Cursorpositionszähler CX, CY entspricht. Gleichzeitig wird der Teil des Bildwiederholspeichers BWS ausgelesen, der durch den linearen Speicheradreßgenerator SAG durch Umwandlung der Zählerstände 0 bis 1023 des Abbildungszählers AX und 0 bis 1023 des Abbildungszählers AY adressiert wird.

Nach Aktivierung der Betriebsart "Bildrollen" durch Umlegen des Schalters S auf "1" liegt ein Freigabesignal an dem jeweiligen Eingang EN der Bildrollzähler RX, RY. Die Bildrollzähler RX, RY zählen die Wegimpulse + Δx, - Δx, + Δy, - Δy der Maus M und schalten die Übernahmesignale auf die Steuereingänge L der Cursorpositionszähler CX, CY. Die in den Registern REGX, REGY gespeicherten Werte 512 werden von den Cursorpositionszählern CX, CY übernommen und der Cursor CU in der Bildschirmmitte des Bildschirms BS positioniert. Verschiebt man die Maus M um z. B. 1000 Bildpunkte in die positive X-Richtung, so nimmt der Bildrollzähler RX den Wert 1000 an, und es wird der Teil des Bildwiederholspeichers BWS ausgelesen, der durch den linearen Speicheradreßgenerator SAG durch Umwandlung des Zählerstandes des 0 bis 1023 des Abbildungszählers AY und

3

Umwandlung der Summe der Zählerstände 1000 des Bildrollzählers RX und 0 bis 1023 des Abbildungszählers AX (Summenzählerstand also 1000 bis 2023) adressiert wird.

Verschiebt man die Maus M so weit in die positive X-Richtung, bis der rechte Rand des Bildausschnitts BD den rechten Bildrand erreicht, d. h., es werden Bildpunkte des Bildes mit den X-Koordinaten 4095 dargestellt, so wird der Extremwert EX2 = 3072 des Bildrollzählers RX erreicht. Der Bildrollzähler RX sperrt seinen Vorwärtszähleingang U und schaltet über seinen Übertragausgang UT das Freigabesignal auf den Steuereingang L des Cursorpositionszählers CX. Somit wird automatisch die Betriebsart "Cursor im Bildausschnitt positionieren" eingeschaltet, obwohl der Schalter S in der Stellung "1" verweilt. Verschiebt man die Maus M weiter in Richtung positive X-Achse, so werden die Wegimpulse + Δx am Vorwärtszähleingang U des Cursorpositionszählers CX gezählt, d. h., der Cursor CU wandert auf dem Bildschirm BS in die positive X-Richtung, da der Zählerstand des Cursorpositionszählers CX größere Werte als 512 annimmt. Die Position des Cursors CU in Y-Richtung bleibt unverändert. Bewegt man nun die Maus M in die negative X-Richtung, so schaltet der Cursorpositionszähler CX über seinen Ausgang AT ein Sperrsignal auf einen Steuereingang ST des Bildrollzählers RX, dessen Rückwärtszähleingang D daraufhin gesperrt wird. Die Wegimpulse - Δx der Maus M werden von dem Cursorpositionszähler CX gezählt, d. h., der Zählerstand wird um die anliegenden - Δx-Impulse dekrementiert, und der Cursor CU wandert somit in Richtung Bildschirmmitte. Wird diese erreicht, der Zählerstand des Cursorpositionszählers CX nimmt also den im Register REGX abgelegten Wert 512 an, so schaltet der Cursorpositionszähler CX über den Ausgang AT ein Freigabesignal auf den Steuereingang ST des Bildrollzählers RX. Der Bildrollzähler RX ist nun wieder bereit, die Wegimpulse - Δx der Maus M zu zählen und schaltet über seinen Übertragausgang UT das Übernahmesignal auf den Steuereingang L des Cursorpositionszählers CX zu dessen Voreinstellung des Zählerstandes mit dem Wert des in dem Register REGX gespeicherten Wertes 512. Die Vor- und Rückwärtszähleingänge U, D des Cursorpositionszählers CX sind gesperrt. Bei einer weiteren "Maus-Bewegung" in die negative X-Richtung werden die Wegimpulse - Δx der Maus M von dem Bildrollzähler RX gezählt, dessen Zählerstand dekrementiert, und der Bildausschnitt BD rollt in die negative X-Richtung. Der Cursor CU bleibt in der Bildschirmmitte positioniert. Die Betriebsart "Bildrollen" ist wieder eingeschaltet.

Wird der Bildausschnitt BD durch Bewegen der Maus M in die negative X-Richtung so lange gerollt, bis der linke Rand des Bildausschnitts BD den linken Bildrand erreicht, so ist der Zählerstand des Bildrollzählers RX gleich seinem Extremwert EX1 = 0. Der Bildrollzähler RX sperrt seinen Rückwärtszähleingang D, und es wird wiederum das Freigabesignal vom Bildrollzähler RX auf den Steuereingang L des Cursorpositionszählers CX geschaltet, und somit ist die Betriebsart "Cursor im Bildausschnitt positionieren" wieder eingeschaltet. Der Cursor CU wandert nun nach weiterer "Maus-Bewegung" wie diese in die negative X-Richtung, da der Rückwärtszähleingang D des Cursorpositionszählers CX die Wegimpulse - Δx der Maus M zählt. Verschiebt man nun die Maus M in die positive X-Richtung, so sperrt der Cursorpositionszähler CX, wie beschrieben, durch sein Sperrsignal den Vorwärtszähleingang U des Rollzählers RX, und der Cursor CU wandert in Richtung Bildschirmmitte, bis der im Register REGX abgelegte Wert 512 erreicht ist. Der Cursorpositionszähler CX schaltet über seinen Ausgang AT das Freigabesignal auf den Steuereingang ST des Bildrollzählers RX, der bei einer weiteren "Maus-Bewegung" in die positive X-Richtung die Wegimpulse + Δx zählt und das Übernahmesignal auf den Steuereingang L des Cursorpositionszählers CX schaltet. Die Vor- und Rückwärtszähleingänge U, D des Cursorpositionszählers CX werden gesperrt, der in dem Register REGX gespeicherte Wert 512 übernommen, und der Cursor CU wird in der Bildschirmmitte positioniert.

Die Durchführung der Betriebsarten "Bildrollen" und "Cursor im Bildausschnitt verschieben" in Y-Richtung entspricht der in X-Richtung und braucht daher nicht näher erläutert zu werden. Selbstverständlich ist auch eine gleichzeitige Verschiebung in X- und Y-Richtung möglich.

**Ansprüche**

1. Anordnung zum Verschieben eines auf dem Bildschirm (BS) eines Sichtgerätes (SG) dargestellten Bildausschnitts (BD) aus einem in einem Bildwiederholspeicher (BWS) abgespeicherten Bild (Bildrollen) und zum Positionieren eines Cursors (CU) auf dem Bildschirm (BS) mit einer Bedieneinheit (BE) zum Verschieben des Cursors (CU) und zum Bildrollen des auf dem Bildschirm (BS) dargestellten Bildausschnitts (BD), **dadurch gekennzeichnet, daß**
während des Bildrollens der Cursor (CU) in eine definierte Position auf dem Bildschirm (BS) gebracht ist, daß, wenn der Rand des Bildausschnitts (BD) den Bildrand erreicht, der Cursor (CU) verschoben wird und daß, wenn der Cursor (CU) die definierte Position erreicht, das Bild gerollt wird.

2. Anordnung nach Anspruch 1, **gekennzeichnet durch :**

a) zwei Register (REGX, REGY), in denen die Koordinaten der definierten Position enthalten sind;

b) Cursorpositionszähler (CX, CY), deren Stände die Position des Cursors auf dem Bildschirm (BS) bestimmen, mit jeweils einem Steuereingang (L) zum Steuern eines an den jeweiligen Registern (REGX, REGY) angeschlossenen Dateneingangs (ZI) und eines jeweiligen Vorwärts- und Rückwärtszähleingangs (U, D), denen Wegimpulse (+ $\Delta x$, + $\Delta y$, - $\Delta x$, - $\Delta y$) aus der Bedieneinheit (BE) zugeführt sind, mit jeweils einem Übertragausgang (AT), an welchem der jeweilige Steuereingang (ST) der Bildrollzähler (RX, RY) angeschlossen ist;

c) die Cursorpositionszähler (CX, CY) schalten nach Erreichen eines in den Registern (REGX, REGY) abgelegten Wertes über ihren jeweiligen Ausgang (AT) ein Freigabesignal auf den Steuereingang (ST) des jeweiligen Bildrollzählers (RX, RY);

d) die Cursorpositionszähler (CX, CY) schalten vor Erreichen eines in den Registern (REGX, REGY) abgelegten Wertes über ihren jeweiligen Ausgang (AT) ein Sperrsignal auf den Steuereingang (ST) des jeweiligen Bildrollzählers (RX, RY);

e) Bildrollzähler (RX, RY) mit je einem Eingang (EN) zum Starten eines Zählvorgangs, deren Zählerstände auf je zwei Extremwerte begrenzt sind, mit jeweils einem Vor- und Rückwärtszähleingang (U, D), denen die Wegimpulse zugeführt sind, mit jeweils einem Übertragausgang (UT), an welchem der jeweilige Steuereingang (L) der Cursorpositionszähler (CX, CY) angeschlossen ist, mit jeweils einem Steuereingang (ST) zum Steuern des jeweiligen Übertragausgangs (UT) und der Vor-und Rückwärtszähleingänge (U, D);

f) die Bildrollzähler (RX, RY) schalten vor Erreichen eines von jeweils zwei Extremwerten bei zwischen den zwei Extremwerten liegenden Zählerständen über ihren jeweiligen Übertragausgang (UT) ein Übernahmesignal auf den Steuereingang (L) des jeweiligen Cursorpositionszählers (CX, CY) zu deren Voreinstellen mit dem Inhalt der jeweiligen Register (REGX, REGY) und zu deren Sperren der Vor- und Rückwärtszähleingänge (U, D);

g) die Bildrollzähler (RX, RY) schalten nach Erreichen eines Extremwertes über den jeweiligen Übertragausgang (UT) ein Freigabesignal auf den Steuereingang (L) des jeweiligen Cursorpositionszählers (CX, CY);

h) aus den Ständen der Bildrollzähler (RX, RY) und denen von Bildpunktzählern (AX, AY) werden Adressen des Bildwiederholspeichers (BWS) gebildet.